# FASCICULE DE BREVET EUROPEEN

(11) **EP 1 321 044 B1**
(45) Date de publication et mention de la délivrance du brevet: **12.12.2007**
(21) Numéro de dépôt: 02447019.7
(22) Date de dépôt: 01.02.2002
(51) Int. Cl.: A23L 1/01, A23L 3/18, B22F 3/00, F23D 14/16, D02G 3/12

(54) **Procede de cuisson d'aliments carnes et installation a cet effet**
Verfahren und Vorrichtung für das Kochen von Fleischprodukten
Process and apparatus for the cooking of meat foods

(30) Priorité: 21.12.2001 EP 01870290
(43) Date de publication de la demande: 25.06.2003
(73) Titulaire: De Kock, Yann, 8420 De Haan (BE)
(72) Inventeur: De Kock, Yann, 8420 De Haan (BE)
(74) Mandataire: Van Malderen, Michel

(56) Documents cités:
- US-A- 3 744 963
- US-A- 4 245 613
- US-A- 4 421 015
- US-A- 4 664 923
- PATENT ABSTRACTS OF JAPAN , 22 septembre 2000 (2000-09-22) & JP 2000 070146 A (KOREA ATOM. ENERGY RES. INST.), 3 juillet 2000 (2000-07-03)

## Description

### Objet de l'invention

La présente invention concerne un procédé amélioré permettant la cuisson d'aliments carnés dans des conditions qui réduisent la perte en eau et qui maintiennent et même augmentent leur saveur.

L'invention s'adresse également à une installation à cet effet.

### Arrière-plan technologique

La plupart des aliments carnés crus, qu'ils soient ou non préalablement transformés, c'est-à-dire hachés, moulus, etc., qui sont « traités » de manière industrielle doivent subir une cuisson. Le terme doit être entendu au sens large, c'est-à-dire comme signifiant être soumis à l'action de la chaleur.

Les techniques industrielles ne sont pas foncièrement différentes des techniques ménagères mais souvent sont adaptées à un traitement rapide de la matière. A cet effet, dans l'industrie, des fours à infra-rouge sont largement utilisés. Comme pour ce qui est nécessaire au niveau ménager, il convient suivant les circonstances, pour les installations industrielles qu'une viande soit saisie, grillée et/ou subisse une cuisson plus ou moins prolongée. Dans le cas des cuissons industrielles, il convient, pour assurer la conservation, que les aliments carnés soient éventuellement cuits à coeur.

On s'est aperçu cependant que la plupart des préparations carnées comportent une teneur relativement importante en eau qui s'évapore au cours du processus de cuisson.

Ces pertes d'eau qui sont jugées inévitables jusqu'à présent, entraînent cependant une série de conséquences au niveau organoleptique qui s'expriment chez le consommateur par des notions telles que la sapidité, l'onctuosité, la sécheresse en bouche, etc. De telles pertes en eau doivent par conséquent être réduites.

### Buts de l'invention

L'invention vise essentiellement à fournir un procédé n'entraînant pas les inconvénients liés aux techniques existantes. Elle vise en particulier à maintenir les propriétés organoleptiques et nutritionnelles en réduisant l'évaporation de l'eau au cours de la cuisson.

### Etat de la technique

De nombreux dispositifs de cuisson ont été utilisés, tels que des fours à micro-ondes, à infra-rouge, des plaques vitro-céramiques, etc.

On connaît d'autre part, en particulier par les documents WO 01/179756, WO 01/179757, WO 01/179758, ainsi que par le document WO 95/27871 et WO 93/18342, des brûleurs à gaz et plus spécifiquement des membranes ou des plaques de fibres de métal fritté convenant pour de tels brûleurs à gaz dont l'avantage réside essentiellement dans le fait qu'ils sont meilleur marché à utiliser que des systèmes électriques. Ces installations sont connues sous le terme MFB (Metal Fibre Burner) et sont largement utilisées dans diverses industries, en particulier pour le séchage en papeterie.

A priori cependant, rien ne n'indiquait ou ne permettait de supposer que les difficultés rencontrées jusqu'à présent dans les modifications des propriétés organoleptiques, en particulier les modifications résultant des pertes en eau des matières carnées lors de la cuisson pouvaient être résolues à l'aide de brûleurs du type MFB.

L'invention sera décrite plus en détail en référence à des modes d'exécution préférés de l'invention donnés à titre d'illustration sans caractère limitatif en se référant aux exemples.

### Brève description du dessin annexé

L'invention sera décrite, ci-après, à titre d'illustration en référence à une représentation schématique en coupe d'une installation conforme à l'invention.

### Eléments caractéristiques de l'invention

L'invention concerne un procédé de cuisson en continu d'aliments carnés, dans lequel ces aliments carnés circulent dans un four-tunnel sur une bande transporteuse ou sur des rouleaux ou galets de transport qui est caractérisé en ce que les aliments carnés sont soumis à l'action d'un brûleur à membrane de fibres métalliques du type MFB.

On observe que selon cette façon de procéder, non seulement des propriétés organoleptiques satisfaisantes, voire améliorées, sont obtenues, mais aussi que les pertes en poids dues à l'évaporation sont réduites.

De plus, ces effets sont obtenus tout en conservant les autres avantages intrinsèques des brûleurs de ce type, en particulier les frais d'exploitation réduits, la durée de vie particulièrement longue et un spectre d'émission compatible avec le spectre d'absorption des matières carnées. De plus, ce type de brûleurs n'émet que très peu de gaz de type CO et NOₓ.

Ce type de brûleurs permet également aisément de construire des fours de cuisson continue destinés à des matières alimentaires carnées, étant donné que la forme particulière du brûleur peut être facilement adaptée à la géométrie du four-tunnel et tout particulièrement aux bandes transporteuses ou équivalents qui équipent traditionnellement les fours-tunnels de cuisson dans l'industrie alimentaire.

Ce type de brûleur permet également un réglage facile des températures tout au long du parcours dans le four-tunnel, de manière à pouvoir saisir, griller, rôtir, cuire à coeur, etc. en fonction des nécessités et dans un ordre chronologique adéquat et adaptable aux nécessités industrielles.

Ce type de brûleur est particulièrement adapté au traitement des matières carnées car il permet d'éviter toute souillure ou pollution des produits à traiter tout en assurant le respect des critères d'hygiène.

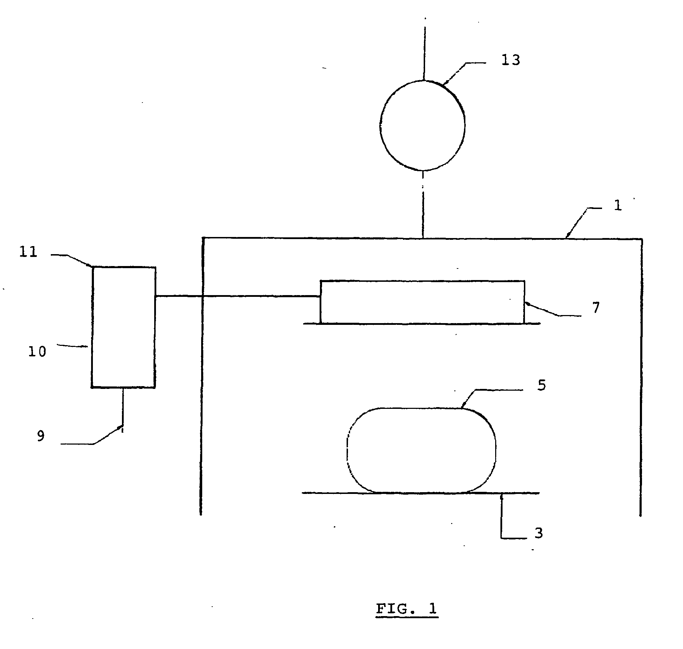

L'installation nécessaire pour la mise en oeuvre du procédé représenté schématiquement à la figure 1 est constitué essentiellement d'un four-tunnel 1 équipé d'une bande transporteuse 3 ou similaire pourvue, à l'avant, d'une entrée pour la matière à cuire 3 et, à l'arrière, d'une sortie pour cette matière après cuisson. Dans le four-tunnel 1 se trouve disposé au moins un brûleur 7 et de préférence plusieurs brûleurs successifs du type MFB équipés d'une régulation thermique. La bande transporteuse 3 circulant en principe à vitesse constante, le maintien à une température imposée par un brûleur 7 dépend du temps de maintien (temps de passage) sous ce brûleur. On conçoit donc que pour des temps de maintien prolongés, plusieurs brûleurs successifs soient nécessaires. Ainsi qu'on l'a indiqué, les brûleurs sont du type MFB et comportent un système de mélange de gaz 10 (combustible 9/comburant 11) et un système de ventilation 13, notamment pour assurer l'évacuation des fumées.

Avantageusement, le four-tunnel est isolé thermiquement pour éviter les pertes thermiques et les risques de brûlures. L'installation, en particulier le système de régulation thermique et éventuellement la vitesse d'avance de la bande transporteuse sont réglés en fonction des besoins et sont commandés par une installation de régulation électronique reliée à des sondes thermiques (non représentées). Le four du type MFB comporte un système d'alimentation en gaz recevant un mélange gaz/air idéal et comporte une plaque de distribution répartissant le mélange gazeux sur une membrane de fibres.

Le fait que dans des brûleurs de ce type la forme et les dimensions de la flamme ne dépendent pas de la puissance thermique fournie est particulièrement favorable. En effet, les têtes de brûleurs peuvent être disposées à une hauteur constante dans le four et il est possible de réguler la puissance des différentes têtes en fonction des besoins sur le trajet de la matière carnée se déplaçant dans le four.

Avantageusement, selon une caractéristique supplémentaire de l'invention, le réglage de la puissance des différentes têtes de brûleur le long du trajet des matières carnées dans le four-tunnel peut être piloté par une installation de régulation électronique, de manière à pouvoir modifier aisément le traitement thermique de la matière carnée en fonction de sa nature. Des sondes thermiques disposées le long du trajet permettent de contrôler et si nécessaire de commander une modification locale de la température selon un programme à respecter.

Dans la plupart des applications, les têtes de brûleurs sont disposées au-dessus de la bande transporteuse mais d'autres dispositions éventuellement complémentaires sont parfaitement envisageables, par exemples latérales ou sous-jacentes.

On entend par aliments carnés des aliments ou préparations alimentaires contenant au moins 50% de viande (muscles, graisses ou abats) d'origine animale, notamment d'origine bovine, porcine, de volailles, de poissons, etc.

Le complément est constitué par les additifs non carnés habituels utilisés en boucherie (par exemple panure et parure) et en charcuterie (en particulier les additifs et assaisonnements alimentaires autorisés).

On observe notamment une réduction de la perte pondérale comparée en particulier à un système de grillage électrique ou à infra-rouge classique. Cette réduction de la perte pondérale est bien entendu bénéfique pour la rentabilité de l'installation, mais confère également d'autres avantages qui seront décrits ci-après.

On observe des réductions de la perte pondérale par des tests dans lesquels le même produit, à savoir des petits morceaux de poulet, est grillé électriquement et selon la technique de l'invention. Les différences varient entre 15 et 30% et le procédé utilisé maintient et même améliore le goût et la qualité. L'un des effets les plus importants liés à l'absence de perte pondérale s'observe cependant pour ce qui concerne le goût. Ces améliorations ont été confirmées par un groupe témoin de consommateurs soumis à des essais organoleptiques de blanc de poulet. Les avantages observés sont indiqués en comparaison avec les produits classiques ayant subi un grillage électrique.

On observe en particulier que la couleur du produit est considérée comme plus attrayante en relation avec une distribution uniforme et homogène de celle-ci. On observe moins d'irrégularités, c'est-à-dire une absence d'un aspect "grillé" local, que dans les cas du produit classique. La sapidité est également considérée comme plus favorable; le produit est décrit comme moins sec et plus "goûteux" par comparaison au produit grillé électriquement.

La texture du produit est reconnue comme étant moins dure par comparaison avec les produits classiques et moins "filamenteuse".

L'appréciation globale résultant des interrogations des consommateurs indique clairement que le produit selon l'invention est considéré comme plus attrayant en ce qui concerne le goût et que une nette préférence lui est accordée.

A titre complémentaire, il convient également de noter les avantages du point de vue nutritionnel. Des essais au laboratoire indiquent que le chauffage très rapide à hautes températures de la surface du produit (en l'occurrence des hamburgers) laisse apparaître moins de dommages des constituants nutritionnels (protéines, acides aminés essentiels et vitamines). De plus, moins de composés aromatiques polycycliques dont l'effet carcinogène est redouté, sont formés par la technique de l'invention.

## Revendications

1. Procédé de cuisson en continu d'aliments carnés, dans lequel ces aliments carnés (5) circulent dans un four-tunnel (1) sur une bande transporteuse (3) ou sur des rouleaux ou galets de transport, **caractérisé en ce que** les aliments carnés sont soumis à l'action d'un brûleur à membrane de fibres métalliques du type MFB (7).

2. Procédé selon la revendication 1, **caractérisé en ce que** les températures sont réglées tout au long du parcours dans le four-tunnel, de manière à pouvoir saisir, griller, rôtir ou cuire à coeur. En fonction des nécessités et dans un ordre chronologique adéquat, en fonction des nécessités industrielles.

3. Installation pour la mise en oeuvre du procédé selon la revendication 1 ou 2, **caractérisée en ce qu**'elle est constituée essentiellement d'un four-tunnel (1) équipé d'une bande transporteuse (3) ou similaire pourvue, à l'avant, d'une entrée pour la matière à cuire (3) et, à l'arrière, d'une sortie pour cette matière après cuisson, ce four-tunnel (1) étant équipé d'au moins un brûleur (7) et de préférence plusieurs brûleurs successifs du type MFB équipés d'une régulation thermique.

4. Installation selon la revendication 3, **caractérisée en ce que** la bande transporteuse (3) circule à vitesse constante et que le maintien à une température imposée par un brûleur (7) est réglé par le temps de maintien (temps de passage) sous ce brûleur.

5. Installation selon la revendication 3 ou 4, **caractérisée en ce que** pour des temps de maintien prolongés, plusieurs brûleurs successifs sont prévus.

6. Installation selon l'une des revendications 3 à 5, **caractérisée en ce que** les brûleurs (7) sont du type MFB et comportent un système de mélange de gaz (10) (combustible (9)/comburant (11)) et un système de ventilation (13) pour assurer l'évacuation des fumées.

7. Installation selon l'une quelconque des revendications 3 à 6, **caractérisée en ce que** le four-tunnel (1) est isolé thermiquement pour éviter les pertes thermiques et les risques de brûlures.

8. Installation selon l'une quelconque des revendications 3 à 7, **caractérisée en ce que** le système de régulation thermique et la vitesse d'avance de la bande transporteuse sont réglés en fonction des besoins et sont commandés par une installation de régulation électronique.

9. Installation selon l'une quelconque des revendications 3 à 8, **caractérisée en ce que** le four du type MFB comporte un système d'alimentation en gaz recevant un mélange gaz/air idéal et comporte une plaque de distribution répartissant le mélange gazeux sur une membrane de fibres.

10. Installation selon l'une quelconque des revendications 3 à 9, **caractérisée en ce que** les têtes de brûleurs sont disposées à une hauteur constante dans le four et que la puissance des différentes têtes est régulée en fonction des besoins sur le trajet de la matière carnée se déplaçant dans le four.

11. Installation selon l'une quelconque des revendications 3 à 10, **caractérisée en ce que** le réglage de la puissance des différentes têtes de brûleur le long du trajet des matières carnées dans le four-tunnel est piloté par une installation de régulation électronique, de manière à pouvoir modifier aisément le traitement thermique de la matière carnée en fonction de sa nature.

12. Installation selon l'une quelconque des revendications 3 à 11, **caractérisée en ce que** des sondes thermiques disposées le long du trajet servent à contrôler et si nécessaire de commander une modification locale de la température selon un programme à respecter.

13. Installation selon l'une quelconque des revendications 3 à 12, **caractérisé en ce que** les têtes de brûleurs sont disposées au-dessus, latéralement et/ou en-dessous de la bande transporteuse.

14. Utilisation du procédé selon la revendication 1 ou 2, **caractérisée en ce que** les préparations alimentaires contiennent au moins 50% de viande (muscles, graisses ou abats) d'origine animale, notamment d'origine bovine, porcine, de volailles, de poissons, etc., le complément étant constitué par les additifs non carnés habituels utilisés en boucherie (par exemple panure et parure) et en charcuterie (en particulier les additifs et assaisonnements alimentaires autorisés)

15. Utilisation de l'installation selon l'une quelconque des revendications 3 à 13 pour la cuisson en continu d'aliments carnés, **caractérisée en ce que** les préparations alimentaires contiennent au moins 50% de viande (muscles, graisses ou abats) d'origine animale, notamment d'origine bovine, porcine, de volailles, de poissons, etc., le complément étant constitué par les additifs non carnés habituels utilisés en boucherie (par exemple panure et parure) et en charcuterie (en particulier les additifs et assaisonnements alimentaires autorisés)

## Claims

1. Method for continuously cooking meat foodstuffs, wherein said meat foodstuffs (5) are conveyed in a tunnel furnace (1) on a conveyor belt (3) or on conveying rolls or rollers, **characterised in that** the meat foodstuffs are subjected to the action of a metallic fiber membrane burner of the MFB type (7).

2. Method according to claim 1, **characterised in that** the temperatures are set along the whole path in the tunnel furnace, so as to be able to seal, grill, roast or medium cook. According to the requirements and in an adequate chronological order according to industrial requirements.

3. Assembly for implementing the method according to claim 1 or 2, **characterised in that** it essentially comprises a tunnel furnace (1) equipped with a conveyor belt (3) or the like, provided with an inlet for the foodstuffs (3) to be cooked at the front and, at the back, with an outlet for such foodstuffs after cooking, said tunnel furnace (1) being equipped with at least one burner (7) and preferably several successive burners of the MFB type equipped with a thermal control.

4. Assembly according to claim 3, **characterised in that** the conveyor belt (3) circulates at a constant speed and the residence at a temperature as imposed by a burner (7) is set by the residence time (crossing time) under said burner.

5. Assembly according to claim 3 or 4, **characterised in that** several successive burners are provided for extended residence times.

6. Assembly according to any of the claims 3 to 5, **characterised in that** the burners (7) are of the MFB type and comprise a gas mixing system (10) (fuel (9)/oxidant (11)) and a ventilation system (13) in order to ensure the fume evacuation.

7. Assembly according to any of the claims 3 to 6, **characterised in that** the tunnel furnace (1) is thermally insulated in order to avoid thermal losses and burning hazards.

8. Assembly according to any of the claims 3 to 7, **characterised in that** the thermal control system and the forward speed of the conveyor belt are set according to the requirements and are controlled by an electronic control assembly.

9. Assembly according to any of the claims 3 to 8, **characterised in that** the MFB-type furnace comprises a gas feeding system receiving an ideal gas/air mixture and comprises a distributing plate dividing the gas mixture on a fiber membrane.

10. Assembly according to any of the claims 3 to 9, **characterised in that** the burner heads are arranged at a constant height in the furnace and the power of the various heads is controlled according to the requirements on the path of the meat foodstuffs circulating in the furnace.

11. Assembly according to any of the claims 3 to 10, **characterised in that** setting the power of the various burner heads along the path of the meat foodstuffs in the tunnel furnace is managed by an electronic control assembly, so as to be able to easily modify the thermal processing of the meat foodstuffs according to their nature.

12. Assembly according to any of the claims 3 to 11, **characterised in that** thermal probes arranged along the path are used for controlling and, if necessary, instructing a local modification of the temperature according to a programme to be followed.

13. Assembly according to any of the claims 3 to 12, **characterised in that** the burner heads are arranged above, laterally and/or under the conveyor belt.

14. Use of the method according to claim 1 or 2 for the continuous cooking of meat foodstuffs, **characterised in that** the food preparations contain at least 50% meat (muscles, fat or offal) from animal origin, more particularly from bovine, porcine, poultry, fish origin or similar, the complement consisting of the usual non-meat additives as used in meat butchery (e.g. breadcrumbs and trimmings) and in pork butchery (more particularly the authorised food additives and seasonings).

15. Use of the assembly according to any of the claims 3 to 13 for the continuous cooking of meat foodstuffs, **characterised in that** the food preparations contain at least 50% meat (muscles, fat or offal) from animal origin, more particularly from bovine, porcine, poultry, fish origin or similar, the complement consisting of the usual non-meat additives as used in meat butchery (e.g. breadcrumbs and trimmings) and in pork butchery (more particularly the authorised food additives and seasonings).

## Patentansprüche

1. Verfahren zum kontinuierlichen Garen von fleischlichen Narungsmitteln, wobei sich die fleischlichen Nahrungsmittel (5) auf einem Förderband (3) oder auf Transportrollen einen Tunnelofen (1) durchlaufen, **dadurch gekennzeichnet, dass** die fleischlichen Nahrungsmittel der Einwirkung eines Brenners mit einer Membran aus Metallfasern des Typs MFB (7) ausgesetzt sind.

2. Verfahren gemäß dem Anspruch 1, **dadurch gekennzeichnet, dass** die Temperaturen über die gesamte Durchlaufstrecke innerhalb des Tunnelofens derart eingestellt sind, dass ein Anbraten, Grillen, Rösten oder Durchgaren möglich ist. In Abhängigkeit von den Anforderungen und in einer geeigneten zeitlichen Abfolge, je nach den industriellen Anforderungen.

3. Anlage zur Durchführung des Verfahrens gemäß den Ansprüchen 1 oder 2, **dadurch gekennzeichnet, dass** sie im Wesentlichen aus einem Tunnelofen (1) besteht, der mit einem Förderband (3) oder Ähnlichem ausgerüstet ist, welcher vorn mit einer Eintrittsöffnung für die zu garende Ware (3) und hinten mit einer Austrittsöffnung für die gegarte Ware versehen ist, wobei der Tunnelofen (1) mit mindestens einem Brenner (7) und vorzugsweise mit mehreren aufeinander folgenden Brennern des Typs MFB, welche über eine Wärmeregulierung verfügen, ausgerüstet ist.

4. Anlage gemäß dem Anspruch 3, **dadurch gekennzeichnet, dass** das Förderband (3) eine konstante Durchlaufgeschwindigkeit aufweist und dass die Einwirkungsdauer einer Temperatur, welche ein Brenner (7) erzeugt, durch die Verweilzeit (Durchlaufzeit) unter diesem Brenner bestimmt wird.

5. Anlage gemäß den Ansprüchen 3 oder 4, **dadurch gekennzeichnet, dass** für längere Verweilzeiten mehrere aufeinander folgende Brenner vorgesehen sind.

6. Anlage gemäß einem der Ansprüche 3 bis 5, **dadurch gekennzeichnet, dass** es sich bei den Brennern (7) um solche des Typs MFB handelt, welche ein System zum Mischen von Gasen (10) (Brenngas (9) / Sauerstoffträger (11)) und ein Ventilationssystem (13), mittels dessen die Abführung der Abgase sichergestellt wird, aufweisen.

7. Anlage gemäß einem beliebigen der Ansprüche 3 bis 6, **dadurch gekennzeichnet, dass** der Tunnelofen (1) wärmeisoliert ist, um Wärmeverluste sowie die Gefahr von Verbrennungen zu vermeiden.

8. Anlage gemäß einem beliebigen der Ansprüche 3 bis 7, **dadurch gekennzeichnet, dass** Wärmeregulierungssystem und die Laufgeschwindigkeit des Förderbandes in Abhängigkeit von den Anforderungen eingestellt werden und mittels einer elektronischen Regulierungsanlage gesteuert werden.

9. Anlage gemäß einem beliebigen der Ansprüche 3 bis 8 **dadurch gekennzeichnet, dass** der Ofen des Typs MFB ein Gasversorgungssystem aufweist, welchem ein ideales Gas/Luft Gasgemisch zugeführt wird, sowie eine Verteilerplatte, welche die Gasmischung über eine Fasermembran verteilt.

10. Anlage gemäß einem beliebigen der Ansprüche 3 bis 9, **dadurch gekennzeichnet, dass** die Brennerköpfe im Ofen in einer konstanten Höhe angeordnet sind und dass die Leistung der verschiedenen Köpfe entlang der Durchlaufstrecke, welche die Fleischware im Ofen zurücklegt, in Abhängigkeit von den Anforderungen reguliert wird.

11. Anlage gemäß einem beliebigen der Ansprüche 3 bis 10, **dadurch gekennzeichnet, dass** die Einstellung der Leistung der verschiedenen Brennerköpfe entlang der Durchlaufstrecke, welche die Fleischware im Tunnelofen zurücklegt, hinweg durch eine elektronische Regulierungsanlage gesteuert wird, und zwar derart, dass die Wärmebehandlung der Fleischware in Abhängigkeit von deren Beschaffenheit auf einfache Weise modifiziert werden kann.

12. Anlage gemäß einem beliebigen der Ansprüche 3 bis 11, **dadurch gekennzeichnet, dass** entlang der Durchlaufstrecke Wärmefühler angeordnet sind, die dazu dienen, eine örtliche Änderung der Temperatur gemäß einem einzuhaltenden Programm zu kontrollieren und erforderlichenfalls durch einen Steuerungsvorgang zu bewirken.

13. Anlage gemäß einem beliebigen der Ansprüche 3 bis 12, **dadurch gekennzeichnet, dass** die Brennerköpfe oberhalb, seitlich und/oder unterhalb des Förderbandes angeordnet sind.

14. Verwendung des Verfahrens gemäß den Ansprüchen 1 oder 2 zum kontinuierlichen Garen von fleischlichen Nahrungsmitteln, **dadurch gekennzeichnet, dass** die Nahrungsmittelzubereitungen mindestens 50 % Fleisch (Muskeln, Fett oder Innereien) tierischer Herkunft enthalten, insbesondere vom Rind, vom Schwein, von Geflügelarten oder von Fischen usw., wobei der verbleibende Anteil aus den nicht-fleischlichen Zusätzen, die üblicherweise in der Fleischverarbeitung (zum Beispiel Paniermehl sowie Haut- und Fettabfall) sowie in der Wurstwarenherstellung (insbesondere die für Nahrungssmittel zugelassenen Zusatzstoffe und Würzmittel) verwendet werden, besteht.

15. Verwendung der Anlage gemäß einem beliebigen der Ansprüche 3 oder 13 zum kontinuierlichen Garen von fleischlichen Nahrungsmitteln, **dadurch gekennzeichnet, dass** die Nahrungsmittelzubereitungen mindestens 50 % Fleisch (Muskeln, Fett oder Innereien) tierischer Herkunft enthalten, insbesondere vom Rind, vom Schwein, von Geflügelarten oder von Fischen usw., wobei der verbleibende Anteil aus den nicht-fleischlichen Zusätzen, die üblicherweise in der Fleischverarbeitung (zum Beispiel Paniermehl sowie Haut- und Fettabfall) sowie in der Wurstwarenherstellung (insbesondere die für Nahrungsmittel zugelassenen Zusatzstoffe und Würzmittel) verwendet werden, besteht.
